# EUROPÄISCHE PATENTSCHRIFT

(11) **EP 0 593 795 B1**
(45) Veröffentlichungstag und Bekanntmachung des Hinweises auf die Patenterteilung: **03.01.1996**
(21) Anmeldenummer: 92117771.3
(22) Anmeldetag: 17.10.1992
(51) Int. Cl.: C05F 11/00, A01G 9/10, C05G 3/04

(54) **Verfahren zur Herstellung von weisstorfähnlichen Bodenverbesserungsmitteln aus Altpapier**
Manufacturing procedure for peat like soil improving substance from waste paper
Procédé pour la fabrication de matière d'amélioration de sol semblable à tourbe sur la base de déchet de papier

(43) Veröffentlichungstag der Anmeldung: 27.04.1994
(73) Patentinhaber: Knauth, Hans, Dipl.-Ing., D-88709 Meersburg (DE)
(72) Erfinder: Knauth, Hans, Dipl.-Ing., D-88709 Meersburg (DE); Knauth, Isabel, D-88709 Meersburg (DE)

(56) Entgegenhaltungen:
- CH-A- 543 461
- DE-A- 3 826 873
- DE-C- 953 533
- US-A- 4 975 108

## Beschreibung

Das Anwendungsgebiet der Erfindung ist die Herstellung von Torfersatzstoffen aus Lignocellulose. Da der Torfverbrauch im gewerblichen und auch im Hobbygartenbau sowie als Basis für Fertigerden immer größer und die Torfvorräte immer kleiner werden, sucht man seit Jahren nach Ersatzstoffen.
Es sind Kompostierverfahren für Lignocellulose mit Altpapieranteilen bekannt. Die Produkte haben einen hohen Biomasseanteil und können dem Torf zugesetzt werden. Den Weißtorf in seiner Funktion als physikalisches Bodenverbesserungsmittel ersetzen, können sie nicht.
Es gibt auch ein Verfahren (DE 36 27 861 A1), bei dem die Cellulose zuerst partiell hydrolysiert, dann extrahiert und anschließend zerfasert wird. Das Verfahren kann für Holzschnitzel und ähnliche pflanzliche Feststoffe eingesetzt werden. Altpapier kann wegen der fehlenden Strukturstabilität nicht eingesetzt werden.
Ein anderer Verfahrensvorschlag (DE-PS 95 35 33) betrifft die Verwertung von faserhaltigem Papierschlamm aus Papierfabriken. Der Schlamm besteht zu 80% aus mineralischen Füllstoffen, wird getrocknet und geraspelt und so mit dem Boden vermischt. Es bildet sich ein hartes Granulat mit geringer Wasseraufnahme. In den Boden eingebracht, ist der Celluloseanteil nach 3 - 6 Monaten verrottet. Der Hochmoortorf mit seiner faserigen Struktur und hohen Saugfähigkeit ist mindestens 12 - 20 Monate stabil und kann damit nicht ersetzt werden.
Gleiches betrifft ein Verfahren (DE-Zeitschrift, Heft 26, S. 911 - 914), bei dem dem Altpapier sogenannte Stickstoff-Kompostbrühe zugesetzt wird, um einerseits die Verrottung im Boden zu beschleunigen und andererseits die Pflanzen vor Stickstoffentzug zu bewahren.
Mit einem weiteren Verfahren (DE 41 14 857 A1) wird Papierpulpe auf den Boden als Mulchschicht zur Verhinderung der Bodenaustrocknung aufgebracht. Es können Farben und Dünger zugesetzt werden. Der Torf als stabiler physikalischer Bodenhilfsstoff und als Grundstoff für Fertigerden kann hiermit nicht ersetzt werden.

Nach einem anderen Verfahren (DE 38 26 873 A 1) werden Papierschnitzel mit Gülle oder einer Phosphat bzw. Nitrat enthaltenden Lösung imprägniert und anschließend bei 110°C getrocknet. Das Produkt dient als Düngemittel, die Verrottung des Celluloseanteils dauert nur kurze Zeit, eine physikalische Langzeitwirkung ist somit nicht beabsichtigt.
Ein in den USA patentiertes Verfahren 4.787.928 schlägt ebenfalls die Herstellung einer Papierpulpe und deren flüssiges Ausbringen auf den Boden von Plantagen als Feuerschutz- bzw. Feuerlöschmittel vor. Auch hierbei kann die Mulchschicht den Boden vor Austrocknung schützen, physikalisch langfristig verbessern kann sie ihn nicht.

Der vorliegenden Erfindung liegt deshalb folgende Aufgabe zugrunde:
Es soll ein Verfahren zur Herstellung von weißtorfartigen Bodenverbesserungsmitteln aus Altpapier entwickelt werden, bei dem die Faserstruktur des Papiers erhalten bleibt, was dann die Bildung von torfartigen Faserflocken ermöglicht, und wobei die Flocken langfristig stabilisiert werden. Das Produkt soll als physikalischer Bodenverbesserer und als Basis für Fertigerden geeignet sein.
Diese Aufgabe wird durch ein Verfahren gemäß Anspruch gelöst.

Die Erfindung weist gegenüber den oben genannten Verfahren folgende Vorteile auf:
1. Die Trocknung bei hohen Temperaturen um 200°C bewirkt eine Stabilität der Fasern und Faserflocken über viele Monate sowohl als Bodenhilfsstoff als auch als Grundsubstanz der Fertigerden.
2. Die weißtorfartigen Faserflocken haben ein hohes Wasserspeichervermögen und ermöglichen eine gute Durchlüftung des Bodens.
3. Der technische Aufwand ist wesentlich geringer als der für die Hydrolyse.
4. Der Prozeß dauert insgesamt 20min., die Kompostierung dagegen Wochen bzw. Monate.
5. Abwasser bzw. Sickerwasser wie bei den Mulchverfahren gibt es nicht.

### Anwendungsbeispiel:

Altpapier wird in einem bei der Papierfabrikation üblichen Pulper bzw. Turbolöser mit Wasser aufgelöst. Die Pulpe wird entstippt, vorhandene Verunreinigungen werden aussortiert.
Danach können Zuschlagstoffe, wie Ligninpulver o.a. und Mineralien zugesetzt werden.
Die Suspension wird dann in einer Schneckenpresse auf einen Trockengehalt von ca. 40% entwässert. Das Wasser wird rezirkuliert. Der Feststoff wird in einer Schlagkreuzmühle grob zerfasert. Die dabei entstehenden Faserflocken werden in einem Heißlufttrockner bei Temperaturen um 200°C getrocknet, wodurch die Struktur der Flocken stabilisiert wird.
Das Produkt ist in seiner Struktur dem Weißtorf sehr ähnlich und kann diesen als physikalisches Bodenverbesserungsmittel und als Grundstoff für Fertigerden voll ersetzen. In seiner Wirkung auf die Pflanzen ist es dem Torf wegen seiner leichteren Benetzbarkeit und hohen Saugfähigkeit sowie langsamerer Wasserabgabe sogar überlegen.

## Patentansprüche

1. Verfahren zur Herstellung eines weißtorfartigen Bodenverbesserungsmittels aus Altpapier, dadurch gekennzeichnet, daß man das Altpapier in Wasser unter Erhalt einer Pulpe auflöst, von der Pulpe das Wasser abpreßt, den so erhaltenen feuchten Feststoff zuerst grob zerfasert sowie danach bei hohen Temperaturen um 200°C trocknet.

## Claims

1. Process for production of a peatlike soilimprover from waste paper, characterised thereby that the waste paper will be disolved in water, the so received liquid pulp then is dewatered by pressing, the than received moist material will be fiberized and thereafter dryed by a temperature near 200°C.

## Revendications

1. Procédé pour la fabrication d'une matière d'amelioration de sol semblable à tourbe sur la base de dechet de papier, caractérisée par la dissolution de dechet de papier dans l'eau pour obtenir une pulpe, puis presse l'eau et effiloche la pulpe humide et enfin seche avec température environ 200°C.
